# EUROPEAN PATENT APPLICATION

(11) **EP 4 439 364 A1**
(43) Date of publication of application: **02.10.2024**
(21) Application number: 24718023.5
(22) Date of filing: 14.02.2024
(51) Int. Cl.: G06F 21/64, G06F 21/62

(54) **ELECTRONIC DEVICE AND DATABASE PROTECTION METHOD THEREOF**

(30) Priority: 14.02.2023 KR 20230019288; 28.03.2023 KR 20230046095
(71) Applicant: Samsung Electronics Co., Ltd., Suwon-si, Gyeonggi-do 16677 (KR)
(72) Inventor: JUN, Hyeeun, Suwon-si Gyeonggi-do 16677 (KR); LEE, Kisung, Suwon-si Gyeonggi-do 16677 (KR); SHIN, Yoonho, Suwon-si Gyeonggi-do 16677 (KR); WOO, Hobin, Suwon-si Gyeonggi-do 16677 (KR)
(74) Representative: Gulde & Partner
(86) International application number: PCT/KR2024/002066
(87) International publication number: WO 2024/172475

(57) **Abstract**

According to an embodiment of the disclosure, an electronic device may include a memory and a processor operatively connected to the memory, wherein the memory may include instructions that cause, when executed, the processor to identify whether or not a specified operation command for data related to an application executed in the electronic device is received, if the specified operation command is received, identify an integrity check level specified for the application, perform an integrity check on the data, if the specified integrity check level of the application is greater than or equal to a reference level, in response to reception of the specified operation command, and determine whether or not to execute the specified operation command for the data according to a result of the integrity check. In addition to the embodiment of the disclosure, various other embodiments are possible.

## Description

### [Technical Field]

Various embodiments of the disclosure relate to an electronic device and a method for protecting a database thereof.

### [Background Art]

Recently, in line with proliferation of portable electronic devices such as smartphones and tablet PCs, hardware and software of electronic devices have developed rapidly to execute multiple applications, process a large amount of data, and store data in a database.

In order for an application to be properly executed in an electronic device, data integrity for protecting and maintaining data included in a database is required, and it is necessary to ensure the atomicity of transactions for the database. Data integrity may indicate completeness, accuracy and consistency of data without corruption over processes of transaction, storage and organization. Atomicity may indicate that all results of operations related to one transaction are reflected in the database or that none of them is reflected therein. Electronic devices produce and utilize other additional files in addition to database files in order to ensure data integrity and atomicity for the database.

### [Disclosure of Invention]

An electronic device according to the disclosure may include a memory and a processor operatively connected to the memory, wherein the memory may include instructions that cause, when executed, the processor to identify whether or not a specified operation command for data related to an application executed in the electronic device is received, if the specified operation command is received, identify an integrity check level specified for the application, perform an integrity check on the data, if the specified integrity check level of the application is greater than or equal to a reference level, in response to reception of the specified operation command, and determine whether or not to execute the specified operation command for the data according to a result of the integrity check.

An operation method of an electronic device may include identifying whether or not a specified operation command for data related to an application executed in the electronic device is received, if the specified operation command is received, identifying an integrity check level specified for the application, performing an integrity check on the data, if the specified integrity check level of the application is greater than or equal to a reference level, in response to reception of the specified operation command, and determining whether or not to execute the specified operation command for the data according to a result of the integrity check.

A computer-readable recording medium storing a program according to the disclosure may perform identifying whether or not a specified operation command for data related to an application executed in the electronic device is received, if the specified operation command is received, identifying an integrity check level specified for the application, performing an integrity check on the data, if the specified integrity check level of the application is greater than or equal to a reference level, in response to reception of the specified operation command, and determining whether or not to execute the specified operation command for the data according to a result of the integrity check.

### [Brief Description of Drawings]

FIG. 1 is a block diagram of an electronic device in a network environment according to an embodiment.
FIG. 2 is a diagram schematically illustrating the structure of an operating system executed in an electronic device according to an embodiment.
FIG. 3 is a diagram illustrating a WAL file structure utilized in a database management module of an electronic device according to an embodiment.
FIG. 4 is a diagram illustrating an operation of managing a database utilizing a WAL file in a database management module of an electronic device according to an embodiment.
FIG. 5 is a flowchart illustrating a data protection method of an electronic device according to an embodiment.
FIG. 6 is a diagram illustrating a situation in which data corruption occurs in an electronic device according to an embodiment.
FIG. 7 is a flowchart illustrating a data protection operation according to a specified operation command of an electronic device according to an embodiment.
FIG. 8 is a diagram illustrating a situation in which data corruption occurs in an electronic device according to an embodiment.
FIG. 9 is a flowchart illustrating a data protection operation according to a specified operation command of an electronic device according to an embodiment.
FIG. 10 is a flowchart illustrating a WAL frame integrity check operation of an electronic device according to an embodiment.
FIG. 11 is a flowchart illustrating a WAL frame checksum check operation of an electronic device according to an embodiment.
FIG. 12 is a flowchart illustrating a file hole check operation of an electronic device according to an embodiment.
FIG. 13 is a flowchart illustrating an open integrity check operation of an electronic device according to an embodiment.

### [Mode for the Invention]

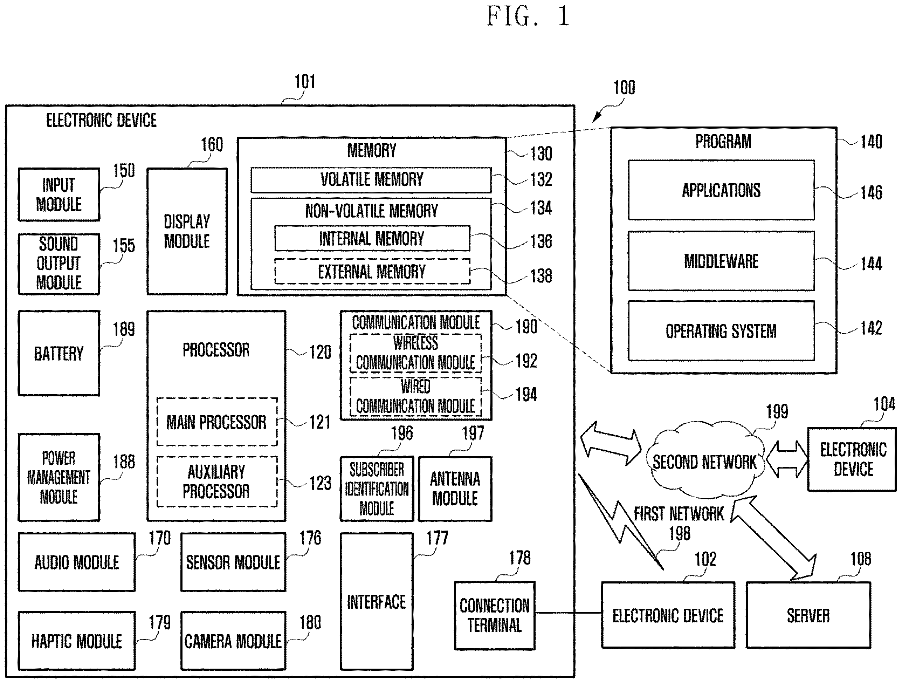

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

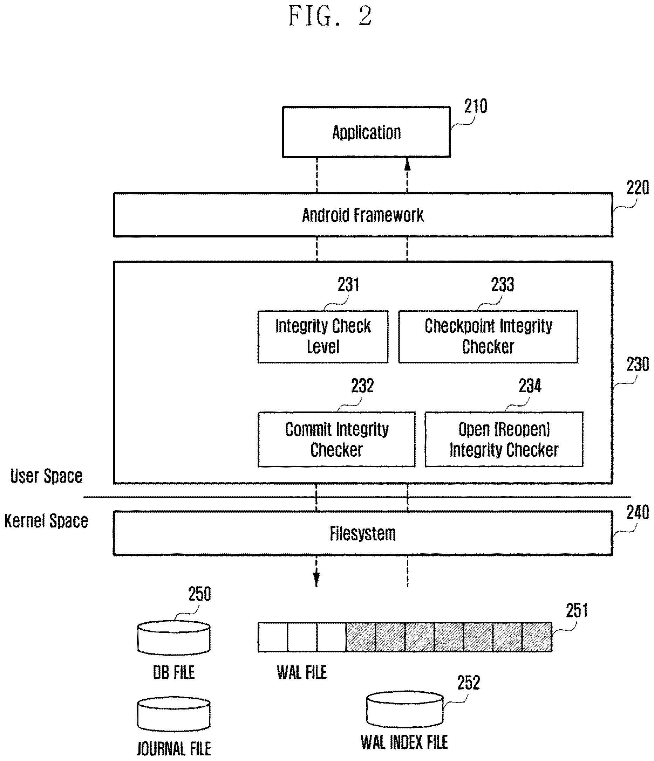

FIG. 2 may briefly illustrate the structure of an operating system executed by a processor 120 (e.g., the processor 120 in FIG. 1) of an electronic device (e.g., the electronic device 101 in FIG. 1) according to an embodiment.

According to an embodiment, the processor 120 may include a main processor (e.g., the main processor 121 in FIG. 1) (e.g., a central processing unit or an application processor) or an auxiliary processor (e.g., the auxiliary processor 123 in FIG. 1) (e.g., a graphics processing unit, a neural processing unit (NPU), an image signal processor, a sensor hub processor, or a communication processor) that operates independently of or together with the main processor.

According to an embodiment, the processor 120 may be operatively connected to a memory (e.g., the memory 130 in FIG. 1) and execute various instructions having configuration of authorities or attributes related to an operating system, middleware, or various applications stored in the memory 130, or instructions including processes, thereby loading a variety of data related thereto and performing various operations. For example, the processor 120 may execute an application 210 through an operating system, for example, the Google Android operating system, and execute a database management module stored in the memory 130 to execute various commands (e.g., various transactions such as opening, writing, and/or closing of the database) related to processing of related data.

According to an embodiment, the processor 120 may execute an operating system stored in the memory 130, and an operating system structure according thereto may include a user space and a kernel space. According to the operating system structure executed in the processor 120, instructions or processes may be executed through a logical separation structure of the user space 210 and the kernel space 220 with respect to execution authorities or attributes of the instructions stored in the memory 130. Under such an operating system structure, the processor 120 may load and execute a database management module 230 stored in the memory 130, execute various applications 210 through a framework 220 (e.g., Android framework), and manage a variety of data related to the executed applications by the database management module 230 through a file system 240, thereby guaranteeing data integrity.

According to various embodiments, the processor 120 may execute at least one of instructions included in the database management module 230 stored in the memory 130, and the database management module 230 may produce, save, delete, and/or change a database file 250 for data related to the applications 210, based on specified commands (e.g., various transactions such as opening, writing, and/or closing of the database) received according to the execution of the applications 210.

According to an embodiment, the database management module 230 may perform an integrity check in consideration of characteristics of applications, characteristics of database-related operations, and characteristics of the integrity check in order to prevent a situation that may cause database corruption during the runtime of the electronic device 101 and reduce data corruption even if a problem occurs.

According to an embodiment, the database management module 230 may ensure atomicity of transaction using a write-ahead log (WAL) method. Here, the WAL method refers to a method of producing a separate file, for example, a WAL file 251, before adding new data or deleting and/or changing data stored in the database file 250 according to transactions, pre-store operation processing results related to the transactions in a separate file, and then store data in the database file 250 or delete and/or change data stored in the database file 250 by reflecting the operation processing results stored in the separate file to the database file 250 if certain conditions are met.

According to an embodiment, in the case where the database management module 230 uses the WAL method, even if an error occurs while the operation processing results of transactions are stored in the WAL file 251, the data in the database file 250 may remain without being affected, thereby ensuring data integrity.

According to an embodiment, the database management module 230 may use a separate index file, for example, a WAL index file 252, to quickly determine the correlation between data stored in the WAL file 251 and data stored in the database file 250. However, the solution is not limited to using a separate index file.

According to an embodiment, if a specified operation command for related data is received according to execution of the application 210, the database management module 230 may identify an integrity check level specified for the application 210 and, if the integrity check level specified for the application is equal to or greater than a reference level, perform an integrity check on data related to the application 210 in response to the reception of the specified operation command. The reference level may be preconfigured, e.g. by a user.

According to an embodiment, the database management module 230 may include an integrity check level configuration unit 231 that configures an integrity check level that may be used as reference information for determining whether or not to perform the integrity check to protect the database at the time of receiving a specified operation command for data related to the application 210. According to an embodiment, the integrity check level may include reference information configured to correspond to an integrity level required or granted for target data. For example, the integrity check level configured for security data requiring reliable stability and a high integrity level may be configured to be higher than normal data requiring a high processing speed and a low integrity level. According to an embodiment, the integrity check level may have various levels such as a low level, a normal level, and a high level depending on configurations or user selection.

According to an embodiment, the integrity check level may be respectively configured for each application. For example, the integrity check level may be configured to be higher for one application, and the integrity check level may be configured to be lower for another application. For example, the integrity check level may be configured to be higher for applications where stability is important. For example, the integrity check level may be configured to be lower for applications where query performance is important. Further, a same integrity check level may be configured for a group of applications.

According to an embodiment, the integrity check level may be configured or selected by comparing and measuring the importance of data integrity and processing efficiency in applications such as stability or query performance based on characteristics of respective applications.

According to an embodiment, depending on the purpose of application, database stability may be important or query performance may be more important.

According to an embodiment, the integrity check level may be respectively configured for each application depending on the importance of database stability. For example, the integrity check level may be configured to be higher for a database of an application where stability is important. By configuring the integrity check level as a high level, specified checks (e.g., database page integrity and/or WAL frame header integrity checks) may be performed in operations (e.g., a commit operation and/or a WAL checkpoint operation) specified to be performed at a normal level according to execution of a corresponding application. By configuring the integrity check level as a high level, a specified check (e.g., a WAL file checksum check) may be further performed in an operation (e.g., a WAL checkpoint operation) specified to be performed at a high level. In other words, by configuring the integrity check level as a high level, additional checks may be performed compared to a normal level.

For example, by configuring the integrity check level as a normal level for an application requiring normal stability or normal performance, a specified check may be performed in an operation specified to be performed at the normal level, thereby reducing performance degradation and providing a certain level of stability. For example, the integrity check level may be configured as a low level as a default value for a database of general applications that require higher performance than stability, thereby avoiding additional checks.

According to an embodiment, the integrity check level configured for the database of the application may be stored in the memory 130 and identified in operation. For example, an integrity check level value may be identified in various ways, such as a parameter (e.g., open flag) transmitted in a database open operation, query (e.g., PRAGMA query), or a new API, according to execution of the application.

According to an embodiment, the reference level for the integrity check level may be preconfigured to be a normal level, for example, as a default value or may be selected and configured by a user in the electronic device 101.

According to an embodiment, the database management module 230 may include a commit integrity check module 232 that performs a commit integrity check based on a configured integrity check level at the time of receiving a commit operation command for data related to the application 210. The commit operation may include, for example, an operation of recording page data existing in a cache memory, which is newly written or changed according to the execution of various transactions such as writing, deleting, or modifying, in a database file or a WAL file.

According to an embodiment, the commit integrity check module 232 may prevent corrupted data from being recorded in a database file by a commit operation if page data in the cache memory is corrupted due to various problems at the time of receiving a commit operation command.

According to an embodiment, the commit integrity check module 232 may perform an integrity check on page data in the cache memory. If corrupted data is identified in specific page data through the commit integrity check module 232, the database management module 230 may not perform a commit operation on the corresponding page data. Afterwards, if an open operation is performed on the database file, the database file may be used normally.

According to an embodiment, the database management module 230 may include a checkpoint integrity check module 233 that performs a checkpoint integrity check based on a configured integrity check level at the time of receiving a checkpoint operation command for data related to the application 210.

According to an embodiment, the checkpoint integrity check module 233 may prevent data, which is corrupted by various problems such as WAL file data being corrupted due to various problems or reference to an incorrect location due to an error of the database management module 230 or operating system, from being recorded in a database file at the time of receiving a checkpoint operation command.

According to an embodiment, the checkpoint integrity check module 233 may perform an integrity check on WAL file data and identify corrupted data from a specific page of the WAL file. If corrupted data is identified from a specific page of the WAL file through the checkpoint integrity check module 233, the database management module 230 may not perform a checkpoint operation on the page data. Afterwards, if an open operation is performed on the database file, the database file may be used normally.

According to an embodiment, the database management module 230 may include an open integrity check module 234 that performs an open integrity check based on a configured integrity check level at the time of receiving an open operation command for data related to the application 210.

According to an embodiment, the open integrity check module 234 may prevent page data corrupted by a WAL recovery operation from passing through in a database open operation according to execution of an application.

According to an embodiment, the database management module 230 may include, for example, an SQLite database engine used in the Google Android operating system.

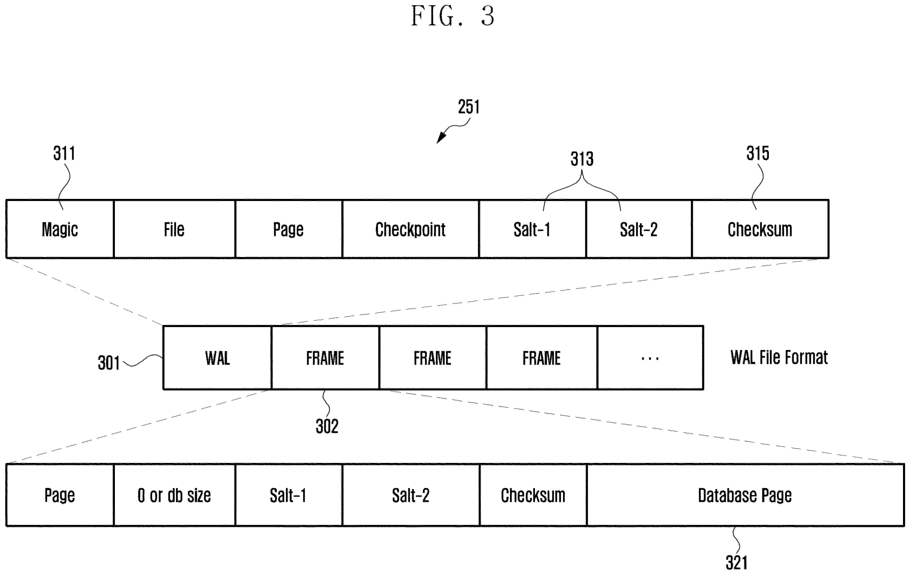

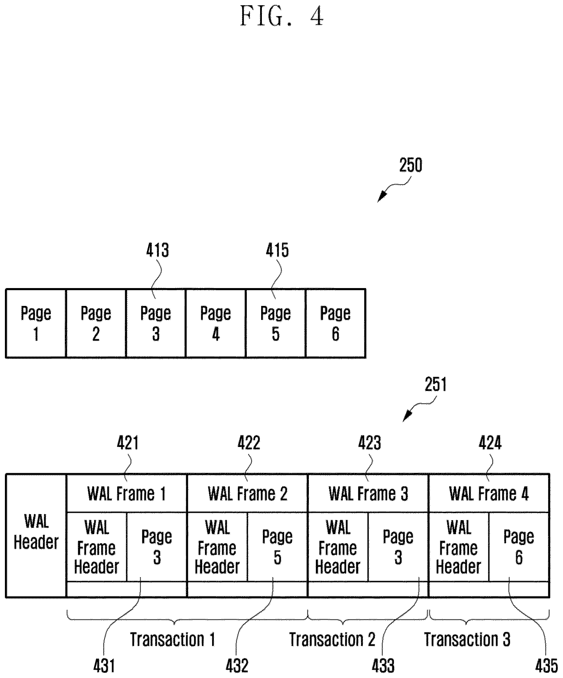

FIG. 3 is a diagram illustrating the structure of a WAL file 251 utilized in a database management module (e.g., the database management module 230 in FIG. 2) of an electronic device according to an embodiment, and FIG. 4 is a diagram illustrating an operation of managing a database utilizing a WAL file 251 in the database management module of an electronic device according to an embodiment.

Referring to FIGS. 3 and 4, a database file (e.g., the database file 250 in FIG. 2) may be divided into chunks (e.g., pages) of a predetermined size (e.g., 4KB), which is able to be logically configured, and then may be managed and maintained. In the structure of the database file 250, a first page may include a database header and a database schema, and the remaining pages subsequent thereto may include database content and data structures for quick database search.

According to an embodiment, a WAL index file (e.g., the WAL index file 252 in FIG. 2) may be used to quickly determine whether recent modifications to each page of the database file 250 exist in the WAL file (e.g., the WAL file 251 in FIG. 2) or the database file 250.

According to an embodiment, if a specific page number is transmitted, a processor (e.g., the processor 120 in FIG. 1) may quickly search whether or not a corresponding page exists in the WAL file and, if the corresponding page exists, at which position (e.g., what FRAME) it exists in the WAL file, based on a hash table existing in the WAL index file (e.g., the WAL index file 252 in FIG. 2), for example, by the database management module 230. An area for configuring a file lock may be provided in the WAL index file 252 in order to control simultaneous access (read/write) to the database file 250, and problems that may occur when simultaneously accessing the database file 250 may be solved through the file lock.

Referring to FIG. 3, the WAL file 251 may include a WAL header 301 and a plurality of WAL frames 302. The WAL header may include fundamental information related to the WAL file, which may also be referred to as fields. Information included in the WAL header 301 may include, for example, a magic 311 including a magic number for recognizing a WAL file, a salt 313 including an arbitrary value produced when a WAL file is initialized and used to identify whether or not the WAL frame is normal, and a checksum 315 including information for determining whether or not the WAL header has an error. Changes to the database file 250 may be configured and reflected as frames in the WAL file 251. The frame 302 of the WAL file 251 may include a WAL frame header and a page 321, and each frame may be mapped to a page of the database file 250, and the mapped page number may be recorded in the WAL frame header.

According to an embodiment, an example of invalidation of a WAL file may include the case in which a WAL file does not exist, in which the size of the WAL file is 0, in which a header of the WAL file is invalid (e.g., zero filled), or in which a valid frame does not exist in the WAL file.

Referring to FIG. 4, this is intended to explain the operation process for the WAL file 251 during an arbitrary transaction (e.g., write transaction) operation, assuming that the current database file 250 includes, for example, six pages.

According to an embodiment, if a change occurs in a specific page of a database file according to reception of an arbitrary transaction operation command, the WAL file may be consecutively written in units of WAL frames as shown in the drawing.

According to an embodiment, according to an operation of modifying Page 3 (413) and Page 5 (415) of the database file 250 by a first transaction (Transaction 1), new Page 3 (431) and Page 5 (432) reflecting the modifications may be included in WAL frame 1 (421) and WAL frame 2 (422), respectively, and added to the WAL file 251.

According to an embodiment, if Page 3 (413) is modified by a second transaction (Transaction 2), new Page 3 (433) reflecting the modification of the second transaction may be included in new WAL frame 3 (423) and added to the WAL file 251. In this case, Page 3 (431) included in WAL frame 1 (421) added in the previous transaction (Transaction 1) may not be used.

According to an embodiment, a plurality of pages reflecting modifications may be added to the WAL file according to a plurality of transaction operations. If the size of the WAL file continues to grow according to the number of transactions performed, subsequent reading performance may deteriorate or storage may be inefficient. Accordingly, the processor 120 may perform an operation of transferring data recorded in the WAL file to an existing database file. The operation of transferring data recorded in a WAL file to an existing database file may be referred to as a checkpoint.

According to an embodiment, since the thread executing the checkpoint operates by obtaining all read or write locks in the WAL index file 252, other operations may not be performed until the checkpoint ends, and other write transactions may not be allowed while the checkpoint is in progress.

According to an embodiment, a checkpoint for transferring data recorded in the WAL file to the database file may be performed in the state in which a plurality of pages is added to the WAL file, as shown in FIG. 4, by three write transactions on the database file.

Referring to FIG. 4, the third and fifth pages 431 and 432 may be modified in the first transaction, the third page 433 may be modified again in the second transaction, and the sixth page 435 may be newly added in the third transaction (Transaction 3).

According to an embodiment, the checkpoint may be performed based on the WAL file produced and/or changed according to the three transactions as described above, so that modifications recorded in frames of the WAL file may be subsequently copied to a database file.

According to an embodiment, in the case where modifications to the same page of the same database file are reflected in the WAL file several times, only the latest modification reflected may be copied to the database file. For example, modifications to Page 3 (413) may be applied to Frame 1 (421) and Frame 3 (423) of the WAL file, and in this case, the modification applied to WAL frame 3 (423) may be copied to database file (250). If the data included in the frame of the WAL file 251 is normally copied to the database file in the above-described manner, the WAL file is no longer needed, and accordingly, the WAL file may be invalidated (e.g., marked as not valid).

According to an embodiment, if a valid WAL file exists at the time of opening a database using the WAL method, a WAL recovery operation may be performed to reconstruct information about a previously written page. The WAL recovery operation may be verifying normality by identifying the checksum of the WAL frames included in the WAL file. This operation may be terminated if an abnormal WAL frame is found while checking all WAL frames. Accordingly, only the content up to the frame identified as normal, among the WAL frames, may be used in the database, and data included in the WAL frame identified as abnormal and all frames subsequent thereto may be ignored.

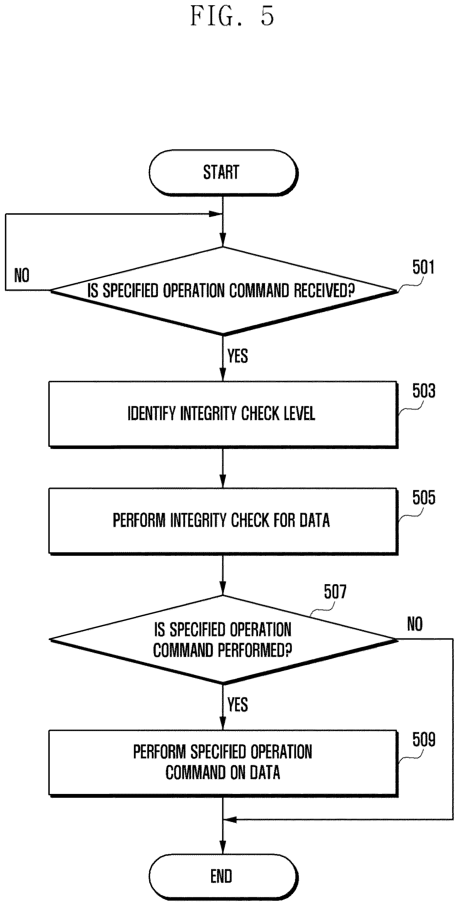

FIG. 5 is a flowchart illustrating a data protection method of an electronic device (e.g., the electronic device 101 in FIG. 1) according to an embodiment.

According to an embodiment, a processor (e.g., the processor 120 in FIG. 1) may receive a specified operation command by a database management module according to execution of an application in operation 501. For example, the specified operation command may include a transaction operation command, a commit operation command, and/or an open operation command. Hereinafter, the respective operations shown in FIG. 5 are only examples and are not limited thereto, and the sequence thereof may vary, some operations may be omitted, or some operations may be repeatedly performed.

According to an embodiment, if a specified operation command for related data is received according to execution of an application, the processor 120 may identify a specified integrity check level for the application in operation 503 and, if the specified integrity check level for the application is equal to or greater than a reference level, perform an integrity check for application-related data in response to receiving the specified operation command in operation 505.

According to an embodiment, the integrity check level may be configured for each application by comparing and measuring the importance of data integrity and processing efficiency such as stability or query performance based on characteristics of the application, and may be configured as one of various grades according to configuration or user selection.

According to an embodiment, a criterion for the integrity check level may vary depending on the specified operation command or the type of integrity check. For example, a commit integrity check or a checkpoint integrity check according to a commit operation command or a WAL checkpoint operation command may be performed if a configured integrity check level is equal to or greater than a normal level. For example, the integrity check of the WAL frame header may be performed if the level is equal to or greater than the normal level. For example, WAL frame checksum integrity check may be performed if the level is higher than the medium level.

According to an embodiment, the integrity check level configured for a database of the application may be stored in the memory 130 and identified during operation. For example, an integrity check level value may be identified in various ways, such as a parameter (e.g., open flag) transmitted in a database open operation, query (e.g., PRAGMA query), or a new API, according to execution of the application. However, the solution is not limited to the aforementioned ways.

According to an embodiment, the reference level for the integrity check level may be preconfigured to be a normal level, for example, as a default value or may be selected and configured by the user in the electronic device 101.

According to an embodiment, in operation 507, an integrity check result may be identified based on the data integrity check performed in operation 505, and, based on identifying data integrity, a specified operation command may be determined to be performed.

According to an embodiment, according to determining to perform the specified operation command based on the identification of the data integrity in operation 507, the specified operation command for the data may be performed in operation 509. On the other hand, based on the fact that data integrity is not identified as a result of the integrity check in operation 507, the specified operation command may be determined not to be performed.

According to an embodiment, if the integrity check fails, it may be considered that the data is corrupted due to various problems, and a specified operation command may be prevented from being performed on the corrupted data, thereby preventing the corrupted data from being recorded in a database file.

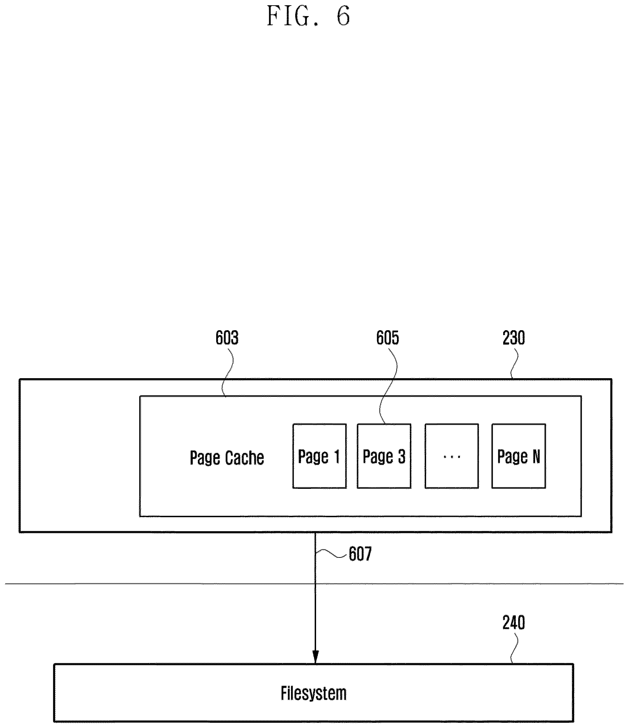

FIG. 6 is a diagram illustrating a situation in which data corruption occurs in an electronic device (e.g., the electronic device 101 in FIG. 1) according to an embodiment.

According to an embodiment, damage to a database file may occur due to various unexpected system or hardware errors at the time of committing a write transaction during the operation of the electronic device 101.

According to an embodiment, for example, a database page cache 603 may be damaged due to external factors in the electronic device 101. For example, if a write operation command 607 issued to a file system 240 is performed on a WAL file or a database file, based on corrupted page data, for example, Page 3 (605) of the database page cache 603, the WAL file or database file may reflect the corresponding page in a corrupted state through the file system 240. Accordingly, if the database file is damaged, recovery thereof may be impossible.

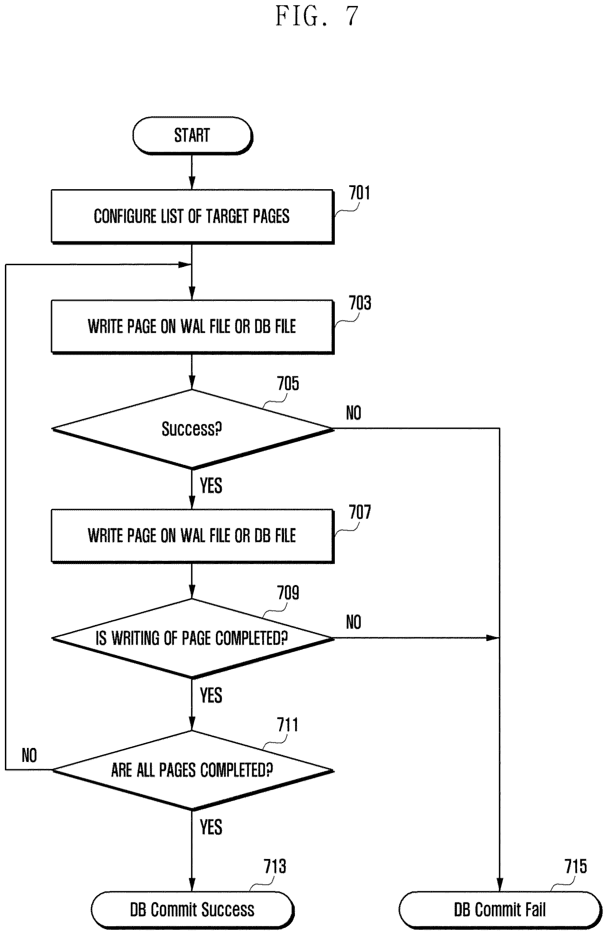

FIG. 7 is a flowchart illustrating a data protection operation according to a specified operation command of an electronic device (e.g., the electronic device 101 in FIG. 1) according to an embodiment.

According to an embodiment, if a transaction command (e.g., a write transaction) is received according to execution of an application, a processor (e.g., the processor 120 in FIG. 1) may produce a new page in the page cache or change an existing page and copy the newly produced page or changed page to a WAL file or a database file in the cache through a commit operation, for example, by the database management module 230.

According to an embodiment, if unexpected corruption occurs in the page cache at the time of a commit operation on a page existing in the cache, the corrupted page may be included in the database, which may cause corruption in a subsequent read operation.

According to an embodiment, a commit integrity check may be performed at the time of receiving a specified operation command, for example, at the time of receiving a commit operation command.

According to an embodiment, the commit integrity check may perform a page integrity check before writing each page according to the commit operation, and proceed with the commit operation if it is successful. Accordingly, it is possible to prevent corrupted data from being copied to the database file.

Hereinafter, the respective operations shown in FIG. 7 are only examples and are not limited thereto, and the sequence thereof may vary, some operations may be omitted, or some operations may be repeatedly performed.

Referring to FIG. 7, when a commit integrity check starts, a list of pages subject to a commit operation may be configured in operation 701. Hereinafter, the commit integrity check operation may be performed if an integrity check level configured for an application is, for example, a normal level or more.

According to an embodiment, a page integrity check may be performed on the current page, based on the page list, in operation 703.

According to an embodiment, in the page integrity check, whether or not each page is normal may be determined by identifying meta data of a page header depending on the type of page. Here, the page header or meta data may be specified to use a method specified for the database. Therefore, if the page header or meta data contains data against the method specified for the database, it may be determined to be abnormal. According to an embodiment, which is not limiting for the present solution, the type of page may be specified as a fixed value in the first byte of the page header in SQLite. For example, depending on the type of page, a page type value of the first byte in the page header may be configured as 0x02 in the case of an interior node page of an Index B-tree, and a page type value of the first byte in the page header may be configured as 0x05 in the case of an interior node page of a Table B-tree. Accordingly, a page that does not contain a specified value may be determined to be corrupted as an abnormal page.

According to an embodiment, if the page to be checked is the first page, a page integrity check may be performed by identifying whether or not a database header is normal. The page integrity check may be performed by identifying, for example, whether or not the page data starts with "SQLite Format 3\000", whether a file format write version (18 offset 1 byte of the page) is a value of 1 or 2, or whether a file format read version (19 offset 1 byte of the page) is a value of 1 or 2.

According to an embodiment, if a page to be checked is an interior node of an Index B-tree, the page integrity check may be performed by identifying, for example, whether or not a page header starts with a value of 0x02.

According to an embodiment, if a page to be checked is an interior node of a Table B-tree, the page integrity check may be performed by identifying, for example, whether or not a page header starts with a value of 0x05.

According to an embodiment, if a page to be checked is a leaf node of an Index B-tree, the page integrity check may be performed by identifying, for example, whether or not a page header starts with a value of 0x0A. The aforementioned values, e.g. 0x02, 0x05 and 0x0A are illustrative only and not limiting for the present solution. Other values might be used without affecting the described functionality.

According to an embodiment, if the corresponding page is determined to be normal according to the page integrity check in operation 705, the corresponding page may be written on a WAL file or a database file in operation 707.

According to an embodiment, if it is identified in operation 709 that writing the corresponding page on the WAL file or database file is complete, it may be identified whether or not writing all pages included in the configured page list on the WAL file or database file is completed in operation 711.

According to an embodiment, if it is identified in operation 711 that writing all pages included in the configured page list on the WAL file or database file is completed, the database commit operation is successful and may end in operation 713.

According to an embodiment, if it is identified that there is a next page to be written but has not yet been written on the WAL file or database file from the configured page list in operation 711, the sequence may return to operation 703 for the identified next page, thereby repeating operations 703 to 709.

According to an embodiment, operations 703 to 709 may be repeatedly performed for the respective pages while checking all pages included in the configured page list.

According to an embodiment, if the page integrity check fails for a specific page in operation 705 or if writing on the WAL file or database file fails for a specific page in operation 709, the database commit operation fails and may end in operation 715.

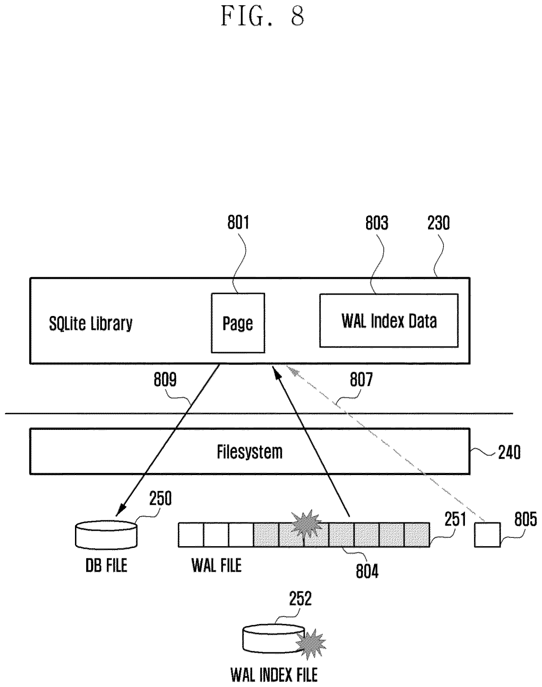

FIG. 8 is a diagram illustrating a situation in which data corruption occurs in an electronic device (e.g., the electronic device 101 in FIG. 1) according to an embodiment.

According to an embodiment, page corruption may occur for various reasons at the time of a database checkpoint while the electronic device 101 is operating in the WAL mode. For example, pages of the WAL file 251 may be corrupted due to various external factors. For example, due to various errors in the memory, page data 801 or WAL index data 803 of the database management module 230 may be corrupted and the WAL index file 252 may be corrupted. For example, if the WAL index file 252 is corrupted, a read transaction 807 may be performed on data of a page 805 in an incorrect location by the database management module 230 or the operating system. For example, a read transaction of the corrupted page data 804 may be performed on a WAL file. For example, a write transaction 809 may be performed on a database file with the corrupted page data 801. Accordingly, if a page in a corrupted state is reflected in the database file 250, recovery thereof may be impossible.

According to an embodiment, it may be difficult for a database engine used in an operating system, for example, the Android operating system, for example, SQLite, to prevent a runtime corruption phenomenon that may occur for various reasons at the time of a database checkpoint for a database. According to characteristics of the database, if the header or schema is damaged, it is impossible to access the database due to inability to access important metadata. Even if some data in the database is corrupted, it may be impossible to access the entire other data and the database may be initialized. If the database is initialized, existing user data, for example, important user data such as contacts information or messages may be lost.

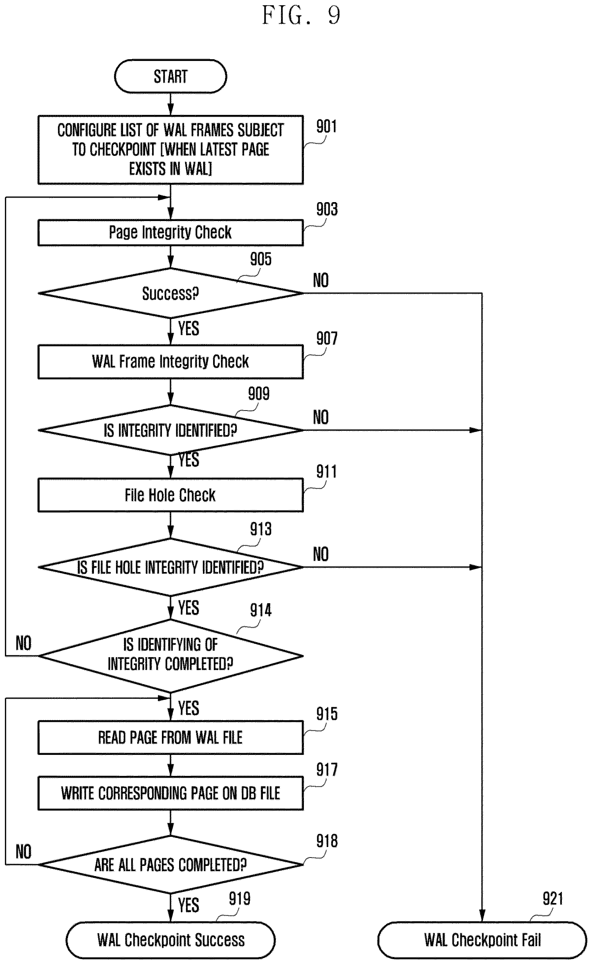

FIG. 9 is a flowchart illustrating a data protection operation according to a specified operation command of an electronic device (e.g., the electronic device 101 in FIG. 1) according to an embodiment.

Referring to FIG. 9, if a checkpoint operation command for data stored in a WAL file is received according to execution of an application, a processor (e.g., the processor 120 in FIG. 1) may perform a checkpoint integrity check by, for example, the database management module 230. The checkpoint integrity check may include, for example, a page integrity check, a WAL frame integrity check, and/or a file hole check for each page data while checking all the WAL frames. Hereinafter, the respective operations shown in FIG. 9 are only examples and are not limited thereto, and the sequence thereof may vary, some operations may be omitted, or some operations may be repeatedly performed.

According to an embodiment, the processor 120 may perform a checkpoint integrity check if an integrity check level configured for the application is equal to or greater than a reference level. A reference level may be predefined by a user, for example.

According to an embodiment, if the integrity check level configured for the application is less than the reference level, the integrity check operation may be omitted, and an operation of sequentially reading the latest pages written in the WAL file and writing the same in the database file may be performed. For example, in the case where the second page exists in the fifth WAL frame and where the fourth page exists in the third WAL frame, if the pages are the latest pages on which the checkpoint has not yet been performed, the fifth WAL frame may be read and the second page may be written on the database file, and then the third WAL frame 3 may be read and the fourth page may be written on the database file. Accordingly, the latest data may be read and written without identifying the previous page data (old page data), which may have an advantage in performance. However, according to this, since pages may be read regardless of the sequence of WAL frames, it may be impossible to perform an operation of identifying the WAL frame checksums, which must be sequentially calculated in frame order.

According to an embodiment, a list of WAL frames subject to a checkpoint may be configured at the time of a WAL checkpoint operation in operation 901. For example, the list of WAL frames subject to a checkpoint may include WAL frames newly produced after the WAL frame in which the checkpoint operation was performed according to the previous checkpoint operation and/or frames in which newly produced or changed pages exist in the WAL file.

According to an embodiment, a page integrity check may be performed on the current WAL frame among the list of WAL frames subject to a checkpoint in operation 903. The page integrity check has been described above, and redundant descriptions thereof may be omitted.

According to an embodiment, if it is determined that page integrity check is successfully completed in operation 905, a WAL frame integrity check may be performed in operation 907. The WAL frame integrity check may include an integrity check for a WAL frame header. The WAL frame integrity check may further include a WAL frame integrity check depending on the integrity check level.

According to an embodiment, if the WAL frame integrity check is successfully completed in operation 909, a file hole check may be performed in operation 911. The file hole check is an additional check to prevent file holes from occurring and may be performed, for example, in the case where the database uses a specific mode (e.g., an auto-vacuum mode). The file hole check may determine whether or not each page is normally produced such that no empty space is produced in the file, based on, for example, the page numbers. The file hole check may also be performed separately without all of the aforementioned preceding steps. According to an embodiment, if the file hole check is successfully completed in operation 913, it may be identified whether or not the integrity check is completed for all WAL frames included in the list of WAL frames subject to a checkpoint in operation 914.

According to an embodiment, if it is identified that there is a next page on which the integrity check has not yet been completed in the list of WAL frames subject to a checkpoint in operation 914, the sequence may return to operation 903, thereby repeating operations 903 to 911, respectively.

According to an embodiment, if the integrity check is successfully completed while checking all WAL frames included in the list of WAL frames subject to a checkpoint, operation 915 may be performed.

According to an embodiment, pages may be read from the respective WAL frames included in the list of WAL frames subject to a checkpoint in operation 915, and a write operation may be performed on corresponding pages of the database file in operation 917.

According to an embodiment, if operation 917 is completed, it may be identified whether or not the WAL checkpoint operation is completed for all WAL frames included in the list of WAL frames subject to a checkpoint in operation 918, and if it is completed, it may be identified that the WAL checkpoint operation is successfully completed in operation 919.

According to an embodiment, if it is identified that there is a next page on which the checkpoint operation has not yet been completed in the WAL frames included in the list of WAL frames subject to a checkpoint in operation 918, the sequence may return to operation 915, thereby reading the identified next page, and a write operation on the corresponding page of the database file may be repeatedly performed in operation 917.

According to an embodiment, if the page integrity check is identified to have failed in operation 905, if the WAL frame integrity check is identified to have failed in operation 909, or if the file hole check is identified to have failed in operation 913, it may be identified in operation 921 that the WAL checkpoint check has failed.

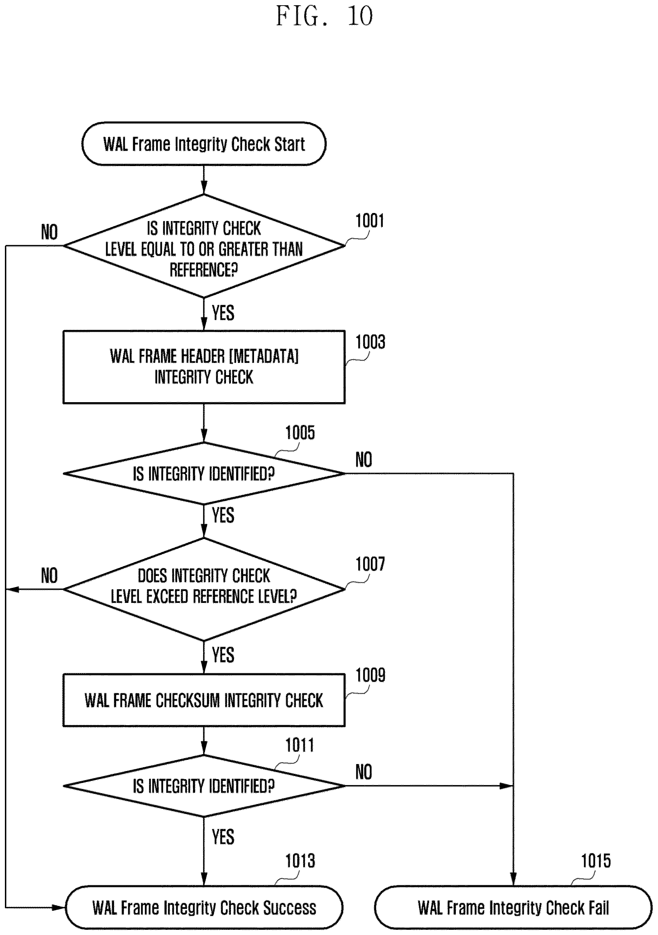

FIG. 10 is a flowchart illustrating a WAL frame integrity check operation of an electronic device according to an embodiment.

Referring to FIG. 10, it is possible to determine whether or not a WAL frame is normal through a WAL frame integrity check.

According to an embodiment, if an integrity check level configured for an application is equal to or greater than a reference level, the processor 120 may cause the database management module to perform a WAL frame integrity check.

The WAL frame integrity check may be performed in operation 907 of FIG. 9 after the page data is identified to be normal through the page integrity check in operation 903. Hereinafter, the respective operations shown in FIG. 10 are only examples and are not limited thereto, and the sequence thereof may vary, some operations may be omitted, or some operations may be repeatedly performed.

According to an embodiment, in operation 1001, it may be identified whether the integrity check level configured for the application is equal to or greater than a reference level (e.g., a normal level). The WAL frame integrity check may be performed if the integrity check level is configured as, for example, a normal level or more.

According to an embodiment, if the integrity check level is equal to or greater than the reference level, an integrity check may be performed on the WAL frame header in operation 1003. The configuration of a header of the WAL frame has a specified method depending on the application, and if it includes data that does not conform to the specified method, it may be determined to be corrupted. For example, referring to FIG. 3, in SQLite, the header of the WAL frame may include a salt value used to produce a checksum of the WAL frame, and the salt value may include the same value as the salt value of the WAL header. For example, the page number is stored in the WAL frame header, and the page number stored in the WAL frame header may include the same value as the page number of the corresponding WAL frame. Accordingly, it is possible to determine whether or not the WAL frame header is normal, based on this information.

According to an embodiment, if the WAL frame header is identified to be normal and then if the integrity check is successfully completed in operation 1005, it may be identified whether or not an integrity check level configured for the application exceeds a reference level (e.g., the normal level) in operation 1007, and if it exceeds the reference level (e.g., if it is a high level), a WAL frame checksum integrity check may be performed in operation 1009. The WAL frame checksum integrity check operation may be omitted if the integrity check level is equal to or less than the reference level.

According to an embodiment, if the integrity check level is equal to or less than the reference level in operation 1007, or if the WAL frame checksum integrity check is identified to be successful in operation 1011, it may be identified in operation 1013 that the WAL frame integrity check has been successfully completed.

According to an embodiment, if the WAL frame header integrity check fails in operation 1005, or if the WAL frame checksum integrity check fails in operation 1011, it may be identified in operation 1015 that the WAL frame integrity check has failed.

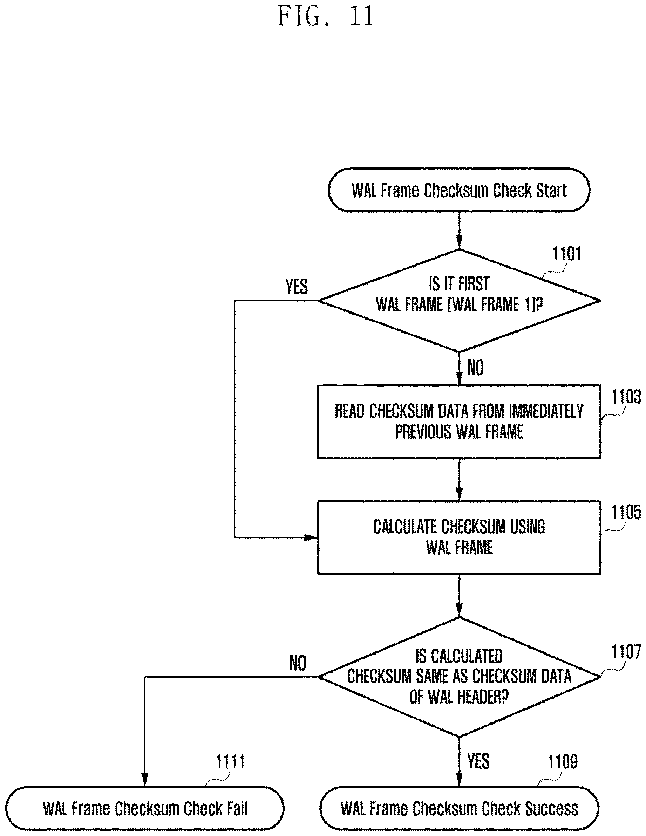

FIG. 11 is a flowchart illustrating a WAL frame checksum check operation of an electronic device according to an embodiment. Hereinafter, the respective operations shown in FIG. 11 are only examples and are not limited thereto, and the sequence thereof may vary, some operations may be omitted, or some operations may be repeatedly performed.

According to an embodiment, if an integrity check level configured for an application exceeds a reference level, the processor 120 may cause the database management module to perform a WAL frame checksum integrity check

According to an embodiment, if a database open operation is performed according to execution of an application and then if the database open operation is normally completed, whether or not the checksum for the WAL frame is normal may already be checked. Therefore, the WAL frame checksum integrity check may be performed by reading checksum data existing in the previous WAL frame header under the assumption that the WAL frame immediately preceding the WAL frame to be checked is normal and then calculating a checksum of the WAL frame data to be checked. Accordingly, it is possible to reduce performance degradation caused by repeatedly calculating checksums of WAL frames that may have previously been checked, for example, from the first WAL frame to the immediately previous WAL frame in sequence.

According to an embodiment, it may be identified whether or not the WAL frame subject to the WAL frame checksum check is the first frame in operation 1101, and if it is not the first frame, checksum data may be read from the immediately previous WAL frame (e.g., having the number immediately preceding the same), and a checksum may be calculated using data of the current frame in operation 1105.

According to an embodiment, it may be identified whether or not the WAL frame subject to the WAL frame checksum check is the first frame in operation 1101, and if it is the first frame, a separate read operation may be omitted, and the sequence may directly proceed to operation 1105, thereby calculating a checksum using the corresponding WAL frame data.

According to an embodiment, it may be identified whether or not the calculated checksum is the same as the checksum of the WAL frame header to be checked in operation 1107.

According to an embodiment, if the checksum calculated is the same as the checksum of the WAL frame header to be checked in operation 1107, the corresponding WAL frame checksum check may be identified to be successful in operation 1109, and if the calculated checksum is not the same as the checksum of the WAL frame header to be checked, a result of the corresponding WAL frame checksum may be identified to have failed in operation 1111.

According to an embodiment, if the checksum of the latest WAL frame subject to the checkpointed is abnormal, or if the checksum of the immediately previous WAL frame used in the calculation is abnormal, a calculated checksum value may be identified as abnormal in operation 1111. Accordingly, the WAL checkpoint operation may be stopped. According to an embodiment, if the WAL checkpoint operation is interrupted, the user or the framework may retry the database open operation including the open integrity check, and accordingly, the database may be used, excluding the WAL frame identified as abnormal. At this time, the abnormal WAL frame may no longer be used in the reopen operation according to the checksum calculation and page integrity check. Therefore, since the reopened database does not contain abnormal WAL frame data, the checkpoint operation may be performed normally.

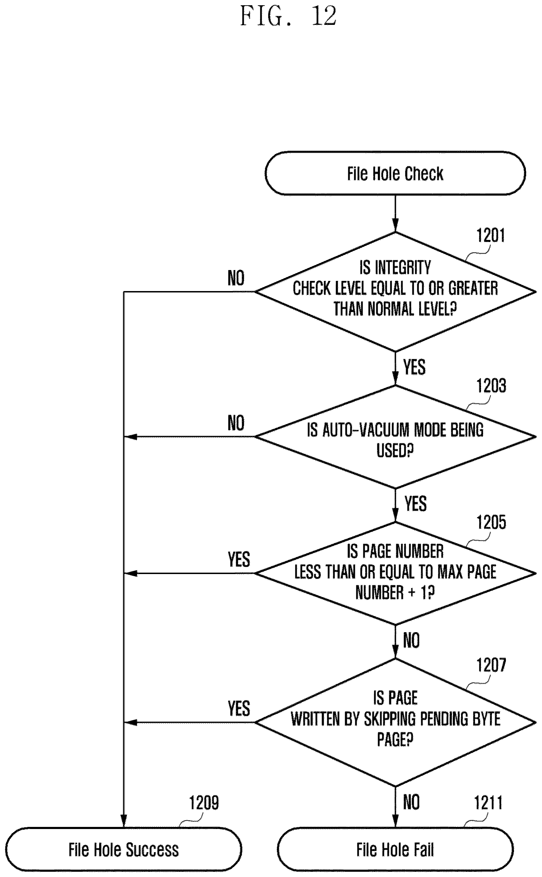

FIG. 12 is a flowchart illustrating a file hole check operation of an electronic device according to an embodiment. Hereinafter, the respective operations shown in FIG. 12 are only examples and are not limited thereto, and the sequence thereof may vary, some operations may be omitted, or some operations may be repeatedly performed.

According to an embodiment, the processor 120 may cause the database management module to perform a file hole check if an integrity check level is equal to or greater than a reference level and if the database uses an auto-vacuum mode.

According to an embodiment, it may be identified whether an integrity check level configured for an application is equal to or greater than the reference level in operation 1201 and whether or not the database uses an auto-vacuum mode in operation 1203, and if the integrity check level is equal to or greater than the reference level and if the database uses the auto-vacuum mode, it may be identified whether the current page number to be written is less than or equal to current file size (e.g., maximum page number) + 1 in operation 1205.

According to an embodiment, if the current page number to be written exceeds maximum page number + 1, it may be identified whether the current page is written by skipping a pending byte page in operation 1207. In the case of a database using the auto-vacuum mode, file holes (e.g., empty spaces in a file) are not to be produced when pages are written, and the pages to be written are to be written with a number one greater than the current file size (e.g., the maximum page number) or a number less than that.

According to an embodiment, if the page number to be written is greater than a value of maximum page number +1, it may be identified whether or not the page number corresponds to a page that is written by skipping a pending byte page in operation 1207. For example, a file lock is used to ensure atomicity when performing read and/or write transactions of the database in the case of SQLite, and in this case, a page to ensure the file lock may be configured as an unusable page for one page at a specific location (e.g., 1GB) of a file. Accordingly, if the page to be written corresponds to the case in which the page configured as an unusable page is skipped, it may be determined to be a normal page.

According to an embodiment, if the page number to be written is greater than maximum page number +1 and if the page number to be written does not correspond to the page that is written by skipping a pending byte page in operation 1207, it is not allowed in the auto-vacuum mode, and the sequence may proceed to operation 1211 to identify that the file hole check has failed.

According to an embodiment, if the integrity check level is lower than the reference level in operation 1201, if the auto-vacuum mode is not used in operation 1203, if the page number to be written is less than or equal to maximum page number +1 in operation 1205, or if the page number to be written does not correspond to the page that is written by skipping a pending byte page in operation 1207, the file hole check may be identified as successful.

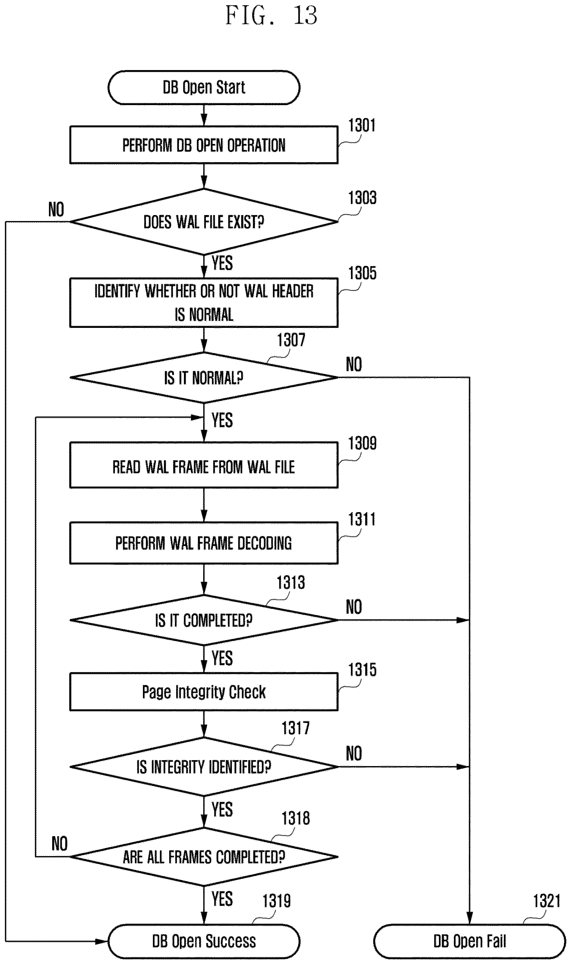

FIG. 13 is a flowchart illustrating an open integrity check operation of an electronic device according to an embodiment. Hereinafter, the respective operations shown in FIG. 13 are only examples and are not limited thereto, and the sequence thereof may vary, some operations may be omitted, or some operations may be repeatedly performed.

According to an embodiment, a processor (e.g., the processor 120 in FIG. 1) may perform an open integrity check by a database management module at the time of receiving an open operation command for application-related data. For example, if a corrupted page fails to be detected in the WAL file at the time of a commit operation according to execution of an application, and if a corrupted page is written in the database file according thereto, the checksum written in the WAL frame header may also be calculated based on the corrupted page, which makes it impossible to determine invalid page data unless an operation is performed to determine whether or not the checksum of the WAL file is normal by sequentially reading and calculating the WAL frame. Therefore, corrupted page data may be detected by performing a WAL recovery operation in the database open operation according to the execution of the application.

The open integrity check according to FIG. 13 may further perform a page integrity check while performing WAL open and recovery operations, thereby detecting a page already having been written in a corrupted state. By detecting a page written in the corrupted state, it is possible to prevent the data written before the location where the corrupted page exists from being lost.

According to an embodiment, according to a database open operation performed in operation 1301, it may be identified whether or not there is a valid WAL file in operation 1303, and if there is a WAL file, it may be identified whether or not the WAL header is normal in operation 1305.

According to an embodiment, if the WAL header is normal in operation 1307, an operation (e.g., WAL open and/or recovery) may be performed to recover information on a normal WAL frame by sequentially reading and calculating all WAL frames of the WAL file in order to reconstruct WAL indexes for all WAL frames of the WAL file, thereby identifying the checksum of the WAL file.

According to an embodiment, operation 1303, operation 1305, and/or operation 1307 may start in a first transaction operation.

According to an embodiment, respective WAL frames may be sequentially read from a WAL file in operation 1309, the WAL frame may be decoded in operation 1311, and if decoding of the WAL frame is identified to be successful in operation 1313, an age integrity check may be performed in operation 1315, and if the page integrity check is identified to be successful in operation 1317, a database open operation for the corresponding page may succeed.

According to an embodiment, it may be identified whether or not the read operation, the decoding operation, and the integrity check are completed for all frames of the WAL file in operation 1318, and if the completion is identified, it may be identified that the database open operation is successful in operation 1319.

According to an embodiment, if it is identified that there is a next frame that has not been completed, among the WAL frames included in the WAL file, in operation 1318, operations may be repeatedly performed to return to operation 1309, thereby reading the identified next frame, decode the corresponding frame in operation 1311, and then perform an integrity check in operation 1315.

According to an embodiment, if the WAL header is abnormal in operation 1307, if the WAL frame decoding fails in operation 1313, or if the page integrity check is identified to have failed in operation 1317, it may be determined that the database open operation has failed.

According to an embodiment, page data corruption may occur due to unexpected external factors, such as temporary errors in memory, damage to the memory due to external libraries, hardware failure, and the like, instead of internal problems in database software logic. In this case, if the corrupted page is included in the database, the application may not even be able to access the database, and in particular, since the Android operating system is implemented to initialize data by deleting the corresponding database file, important user data such as contact information, messages, or notes may be lost. According to an embodiment, it is possible to prevent unexpected corruption of page data, and it is possible to prevent problems from occurring in the entire database file even in the case where the corruption has already occurred, thereby preventing loss of user data.

An operation method of an electronic device (e.g., the electronic device 101 in FIG. 1) may include identifying whether or not a specified operation command for data related to an application executed in the electronic device is received, if the specified operation command is received, identifying an integrity check level specified for the application, performing an integrity check on the data, if the specified integrity check level of the application is greater than or equal to a reference level, in response to reception of the specified operation command, and determining whether or not to execute the specified operation command for the data according to a result of the integrity check.

According to an embodiment, the specified operation command may include at least one of an open operation, a commit operation, or a WAL file checkpoint operation command for a database file related to the application.

According to an embodiment, the method may further include performing a page integrity check on the data if a commit operation command is received according to a transaction operation for the related data according to the execution of the application.

According to an embodiment, the performing of the page integrity check may include performing an integrity check for each page, based on information included in a page header of each page, which is included in a list of pages subject to the commit operation.

According to an embodiment, the integrity check level may be relatively configured based on at least one required level of stability, security, or processing speed required for the application.

According to an embodiment, if the WAL file checkpoint operation command is received, a checkpoint integrity check may be performed on the WAL frames subject to the checkpoint in sequence, and the checkpoint integrity check further includes performing a page integrity check on WAL frames included in a list of WAL frames subject to the checkpoint and performing an integrity check of the WAL frames included in the list of WAL frames.

According to an embodiment, if the specified integrity check level of the application exceeds the reference level, a file hole check may be further performed.

According to an embodiment, the performing of the integrity check of the WAL frames may include performing an integrity check on a header of the WAL frame and performing a WAL frame checksum check if the specified integrity check level of the application exceeds the reference level.

According to an embodiment, the method may further include, if the WAL frame page integrity check and the WAL frame integrity check are identified to be successful, reading page data from the WAL frame and writing on the database file and, if the WAL frame page integrity check and the WAL frame integrity check are identified to have failed, not reading page data from the WAL frame and not writing on the database file.

According to an embodiment, the method may further include performing, if the specified operation command is determined to be performed as a result of the integrity check, the specified operation command on the data for a database file related to the application.

According to an embodiment, an electronic device (e.g., the electronic device 101 in FIG. 1) may include a memory (e.g., the memory 130 in FIG. 1) and a processor (e.g., the processor 120 in FIG. 1) operatively connected to the memory, wherein the memory may include instructions that cause, when executed, the processor to identify whether or not a specified operation command for data related to an application executed in the electronic device is received, if the specified operation command is received, identify an integrity check level specified for the application, perform an integrity check on the data, if the specified integrity check level of the application is greater than or equal to a reference level, in response to reception of the specified operation command, and determine whether or not to execute the specified operation command for the data according to a result of the integrity check.

According to an embodiment, the specified operation command may include at least one of an open operation, a commit operation, or a WAL file checkpoint operation command for a database file related to the application.

According to an embodiment, the memory may further include an instruction that causes, when executed, the processor to perform a page integrity check on the data if a commit operation command is received according to a transaction operation for the related data according to the execution of the application.

According to an embodiment, the memory may further include an instruction that causes, when executed, the processor, for the page integrity check, to perform an integrity check for each page, based on information included in a page header of each page, which is included in a list of pages subject to the commit operation.

According to an embodiment, the integrity check level may be relatively configured based on at least one required level of stability, security, or processing speed required for the application.

According to an embodiment, the memory may further include an instruction that causes, when executed, the processor to perform a checkpoint integrity check, if the WAL file checkpoint operation command is received, on the WAL frames subject to the checkpoint in sequence, and, for the checkpoint integrity check, perform a page integrity check on WAL frames included in a list of WAL frames subject to the checkpoint and perform an integrity check of the WAL frames included in the list of WAL frames.

According to an embodiment, the memory may further include an instruction that causes, when executed, the processor to perform a file hole check if the specified integrity check level of the application exceeds the reference level.

According to an embodiment, the memory may further include an instruction that causes, when executed, the processor, in the integrity check of the WAL frames, to perform an integrity check on a header of the WAL frame and perform a WAL frame checksum check if the specified integrity check level of the application exceeds the reference level.

According to an embodiment, the memory may further include an instruction that causes, when executed, the processor to read page data from the WAL frame and write on the database file if the WAL frame page integrity check and the WAL frame integrity check are identified to be successful, and not read page data from the WAL frame and not write on the database file if the WAL frame page integrity check and the WAL frame integrity check are identified to have failed.

According to an embodiment, a computer-readable recording medium storing a program may perform identifying whether or not a specified operation command for data related to an application executed in the electronic device (e.g., the electronic device 101 in FIG. 1) is received, if the specified operation command is received, identifying an integrity check level specified for the application, performing an integrity check on the data, if the specified integrity check level of the application is greater than or equal to a reference level, in response to reception of the specified operation command, and determining whether or not to execute the specified operation command for the data according to a result of the integrity check.

The embodiments disclosed in this document are presented only as examples to easily explain technical content and help understanding thereof, and are not intended to limit the scope of the technology disclosed in this document. Therefore, the scope of the technology disclosed in this document should be interpreted as including all changes or modifications derived based on the technical ideas of various embodiments disclosed in this document in addition to the embodiments disclosed herein.

## Claims

1. An operation method of an electronic device, the method comprising:
identifying whether or not a specified operation command for data related to an application executed in the electronic device is received;
in case that the specified operation command is received, identifying an integrity check level specified for the application;
in case that the specified integrity check level of the application is greater than or equal to a reference level, performing an integrity check on the data in response to reception of the specified operation command; and
determining whether or not to execute the specified operation command for the data according to a result of the integrity check.

2. The method of claim 1, wherein the specified operation command comprises at least one of an open operation, a commit operation, or a WAL file checkpoint operation command for a database file related to the application, and/or wherein the integrity check level is relatively configured based on at least one required level of stability, security, or processing speed required for the application.

3. The method of claim 1 or claim 2, further comprising performing a page integrity check on the data in case that a commit operation command is received according to a transaction operation for the related data according to the execution of the application.

4. The method of claim 3, wherein the performing of the page integrity check comprises performing an integrity check for each page, based on information included in a page header of each page, which is included in a list of pages subject to the commit operation.

5. The method of claim 2, wherein a checkpoint integrity check is performed, in case that the WAL file checkpoint operation command is received, on the WAL frames subject to the checkpoint in sequence, and
wherein the checkpoint integrity check further comprises:
performing a page integrity check on WAL frames included in a list of WAL frames subject to the checkpoint; and
performing an integrity check of the WAL frames included in the list of WAL frames.

6. The method of claim 5, wherein the performing of the integrity check of the WAL frames comprises:
performing an integrity check on a header of the WAL frame; and
performing a WAL frame checksum check in case that the specified integrity check level of the application exceeds the reference level.

7. The method of claim 5 or claim 6, further comprising:
in case that the WAL frame page integrity check and the WAL frame integrity check are identified to be successful, reading page data from the WAL frame and writing on the database file; and
in case that the WAL frame page integrity check and the WAL frame integrity check are identified to have failed, not reading page data from the WAL frame and not writing on the database file.

8. The method of any one of claims 1 to 7, further comprising performing, in case that the specified operation command is determined to be performed as a result of the integrity check, the specified operation command on the data for a database file related to the application, and/or performing a file hole check in case that the specified integrity check level of the application exceeds the reference level.

9. An electronic device comprising:
a memory; and
a processor operatively connected to the memory,
wherein the memory comprises instructions that cause, when executed, the processor to:
identify whether or not a specified operation command for data related to an application executed in the electronic device is received;
in case that the specified operation command is received, identify an integrity check level specified for the application;
in case that the specified integrity check level of the application is greater than or equal to a reference level, perform an integrity check on the data in response to reception of the specified operation command; and
determine whether or not to execute the specified operation command for the data according to a result of the integrity check.

10. The electronic device of claim 9, wherein the specified operation command comprises at least one of an open operation, a commit operation, or a WAL file checkpoint operation command for a database file related to the application, and wherein the integrity check level is relatively configured based on at least one required level of stability, security, or processing speed required for the application.

11. The electronic device of claim 9 or claim 10, wherein the memory further comprises an instruction that causes, when executed, the processor to perform a page integrity check on the data in case that a commit operation command is received according to a transaction operation for the related data according to the execution of the application.

12. The electronic device of claim 11, wherein the memory further comprises an instruction that causes, when executed, the processor, for the page integrity check, to perform an integrity check for each page, based on information included in a page header of each page, which is included in a list of pages subject to the commit operation.

13. The electronic device of claim 10, wherein the memory further comprises an instruction that causes, when executed, the processor to:
in case that the WAL file checkpoint operation command is received, perform a checkpoint integrity check on the WAL frames subject to the checkpoint in sequence; and
for the checkpoint integrity check,
perform a page integrity check on WAL frames included in a list of WAL frames subject to the checkpoint, and
perform an integrity check of the WAL frames included in the list of WAL frames.

14. The electronic device of any one of claims 9 to 13, wherein the memory further comprises an instruction that causes, when executed, the processor to perform a file hole check in case that the specified integrity check level of the application exceeds the reference level.

15. A computer-readable recording medium storing a program that performs:
identifying whether or not a specified operation command for data related to an application executed in the electronic device is received;
in case that the specified operation command is received, identifying an integrity check level specified for the application;
in case that the specified integrity check level of the application is greater than or equal to a reference level, performing an integrity check on the data in response to reception of the specified operation command; and
determining whether or not to execute the specified operation command for the data according to a result of the integrity check.
